Europäisches Patentamt

European Patent Office

Office européen des brevets

(19)

(11) Veröffentlichungsnummer: **0 011 681**
**B1**

(12) **EUROPÄISCHE PATENTSCHRIFT**

(45) Veröffentlichungstag der Patentschrift: **16.02.83**

(51) Int. Cl.³: **G 01 L 7/12, G 01 D 5/04**

(21) Anmeldenummer: **79102923.4**

(22) Anmeldetag: **13.08.79**

(54) Barometer.

(30) Priorität: **28.11.78 DE 2851359**

(43) Veröffentlichungstag der Anmeldung:
**11.06.80 Patentblatt 80/12**

(45) Bekanntmachung des Hinweises auf die Patenterteilung:
**16.02.83 Patentblatt 83/7**

(84) Benannte Vertragsstaaten:
**AT BE CH FR GB IT LU NL**

(56) Entgegenhaltungen:
**DE - A - 2 263 373**
**FR - A - 831 614**
**FR - A - 2 209 093**
**GB - A - 538 849**
**US - A - 1 647 342**
**US - A - 2 035 025**

(73) Patentinhaber: **Dostmann GmbH & Co. KG**
**D-6980 Wertheim (DE)**

(72) Erfinder: **Dostmann, Heinz**
**Zum Ottersberg 12**
**D-6980 Wertheim Reicholzheim (DE)**

(74) Vertreter: **Grams, Klaus Dieter, Dipl.-Ing.**
**Patentanwaltsbüro Tiedtke-Bühling-Kinne- Grupe-**
**Pellmann-Grams Bavariaring 4**
**D-8000 München 2 (DE)**

Courier Press, Leamington Spa, England.

Barometer

Die Erfindung bezieht sich auf ein Barometer gemäß dem Oberbegriff von Patentanspruch 1. Ein solches Barometer ist bekannt (FR—A— 2 209 093).

Bei dem bekannten Barometer, dessen Membrankapsel aus zwei am Rand gasdicht verbundenen Metallmembranen besteht, ist durch geeignete Vorspannung der Metallmembran dafür gesorgt, daß die Metallmembranen durch den Umgebungsdruck, beispielsweise den Luftdruck, nicht in Anlage aneinander gedrückt werden, sondern je nach der Höhe des Umgebungsdruckes mehr oder weniger großen Abstand voneinander haben. Eine solche Membrankapsel wird als stabilisierte Membrankapsel bezeichnet im Gegensatz zu ebenfalls bekannten nicht stabilisierten Membrankapseln, bei denen die Metallmembranen von einer zusätzlichen Stützfeder auseinandergezogen werden.

Da die eine Metallmembran an der Grundplatte festgelegt ist, führt die andere Metallmembran bei einer Änderung des Umgebungsdruckes eine entsprechende Bewegung aus. Diese Bewegung bzw. Auslenkung wird mittels eines Übertragungswerkes zu einem Zeiger auf der Zeigerwelle übertragen, dessen Stellung über einem Ziffernblatt ablesbar ist. Das Übertragungswerk muß die kleinen Auslenkungen der Membrankapsel in einen grossen Zeigerweg umwandeln und hat zu diesem Zweck ein großes Übersetzungsverhältnis. Das Übertragungswerk besteht beim bekannten Barometer aus dem Zeigerwerk und der Hebelwelle, deren zweiter Hebelarm im wesentlichen parallel zur Ebene der Membrankapsel verläuft. Das Antriebselement des Zeigerwerks ist als schwenkbares Zahnsegment ausgebildet, das mit einem Ritzel auf der Zeigerwelle kämmt und über einem Schlitz in Eingriff mit dem ersten Hebelarm steht. Beim bekannten Barometer besteht die der Membrankapsel zugewandte erste Platine des Zeigerwerkes aus einer platine eines zwischen der Membrankapsel und dem Zeigerwerk angeordneten Uhrwerks. Die Hebelwelle ist mit gewissem Abstand zur ersten Platine zwischen dieser und der Membrakapsel in speziellen Lagerteilen gelagert, die am Uhrwerk angebracht sind.

Außer Zeigerwerken mit einem Ritzel auf der Zeigerwelle und einem damit kämmenden Zahnsegment als Antriebselement sind auch Zeigerwerke mit einer Kette oder einem Faden als Antriebselement bekannt, wobei die Kette oder der Faden einerseits um die Zeigerwelle gewickelt ist und andererseits mit dem ersten Hebelarm verbunden ist.

Ein dem Übertragungswerk des bekannten Barometers ähnliches Übertragungswerk ist in Verbindung mit einem gattungsmäßig anderen Druckmeßgerät durch die Veröffentlichung FR—A—831 614 bekannt.

Nachteilig bei dem dem Oberbegriff von Patentanspruch 1 zugrundeliegenden bekannten Barometer ist, daß das Übertragungswerk erheblichen Raumbedarf hat. Der Erfindung liegt die Aufgabe zugrunde, ein gattungsgemäßes Barometer derart auszubilden, daß sein Raumbedarf geringer ist, wobei allerdings bei gegebener Auslenkung der Membrankapsel ein möglichst großer Zeigerweg gewährleistet sein soll.

Diese Aufgabe wird erfindungsgemäß dadurch gelöst, daß die Hebelwelle in der Ebene der der Membrankapsel zugewandten ersten Platine des Zeigerwerkes verlaufend an dieser Platine gelagert ist und daß die Achse des zweiten Hebelarmes schräg zur Ebene der Membrankapsel verläuft.

Durch die erfindungsgemäße Anordnung der Hebelwelle in der Ebene der ersten Platein ergibt sich eine besonders kompaktes Übertragungswerk, das als Einheit vorgefertigt werden und an der Grundplatte befestigt werden kann. Gleichzeitig ist durch die Schrägstellung der Achse des zweiten Hebelarmes dafür gesorgt, daß das Übersetzungsverhältnis verhältnismäßig groß ist, da dann, wenn der Winkel zwischen der Achse des zweiten Hebelarmes und der Ebene der Membrankapsel—im folgenden als Auflagewinkel bezeichnetbeispielsweise 60° beträgt, bei gegebener Auslenkung der Membrankapsel ein etwa zweimal so großer Drehwinkel der Hebelwelle bewirkt wird, wie bei paralleler Anordnung von zweitem Hebelarm und Membrankapselebene. Unter dem Begriff "Achse des zweiten Hebelarmes" wird hier das Lot von dessen aufliegendem freien Ende auf die Drehachse der Hebelwelle verstanden.

Unter dem Gesichtspunkt eines möglichst großen Ubersetzungsverhältnisses wäre ein Auflagewinkel nahe 90° zwechmäßig. Dabei besteht jedoch die Gefahr einer Verklemmung. Vorzugsweise liegt daher der Auflagewinkel im Bereich von 40° bis 70°, noch günstiger im Bereich von 45° bis 60°.

In vorteilhafter Ausbildung der Erfindung kann vorgesehen sein, daß der zweite Hebelarm mit einem Außengewinde versehen und verstellbar in die Hebelwelle geschraubt ist. Dies ermöglicht eine sehr einfache Einstellung und Justierung der Länge des zweiten Hebelarmes und somit des Auflagewinkels und des Übersetzungsverhältnisses des Übertragungswerkes.

Besonders günstige Ubertragungsverhältnisse ergeben sich, wenn der Verlauf des ersten Hebelarmes dem des zweiten Hebelarmes derart angepaßt ist, daß die Achse des ersten Hebelarmes mit der Bewegungsebene des Antriebselementes einen Winkel einschließt, der kleiner wird, wenn der Auflagewinkel abnimmt. Dadurch wird die Verringerung des Drehwinkels der Hebelwelle bei gegebener Auslenkung aufgrund eines kleineren Auflagewinkels annähernd kompensiert durch einen größeren Weg in der Bewegungsebene des Antriebselementes.

Das Antriebselement des Zeigerwerkes des erfindungsgemäßen Barometers kann sowohl ein Faden oder eine Kette als auch ein Zahnsegment sein. Wenn ein Zahnsegment zur Anwendung kommt, ist dies vorzugsweise in den beiden Platinen des Zeigerwerkes gelagert, so daß die vorhandenen Bauelemente optimal genutzt sind.

Ausführungsbeispiele der Erfindung sind in der Zeichnung dargestellt und werden im folgenden näher erläutert. Es zeigen:

Figur 1 eine perspektivische Ansicht einer Ausführungsform eines erfindungsgemäßen Barometers;

Figur 2 eine vergrößerte, ausschnittsweise Schnittdarstellung gemäß II—II in Figur 1;

Figur 3 eine ausschnittsweise Darstellung eines abgewandelten Elementes der Ausführungsform gemäß Figur 2;

Figur 4 eine ausschnittsweise Darstellung einer Abwandlung der Ausführungsform gemäß den Figuren 1 und 2; und

Figur 5 eine perspektivische Darstellung einer abgewandelten Ausführungsform der ersten Platine des Barometers gemäß den Figuren 1 und 2.

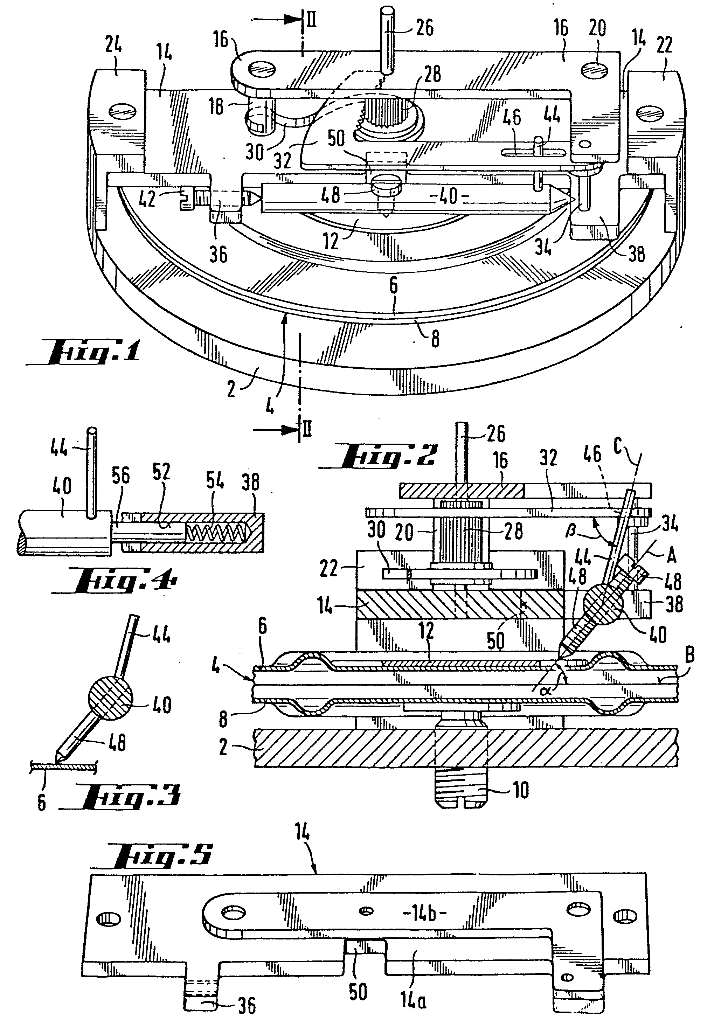

In Figur 1 ist ein Barometer dargestellt, wobei allerdings dessen Gehäuse, Sichtscheibe, Ziffernblatt und Zeiger weggelassen sind. Das dargestellte Barometer umfaßt eine kreisförmige Grundplatte 2, die eine ebenfalls kreisförmige Membrankapsel 4 konzentrisch trägt. Die Membrankapsel 4 besteht aus einer in den Figuren 1 und 2 oberen Metallmembran 6 sowie einer unteren Metallmembran 8, die an ihrem Rand Luftdicht miteinander verbunden sind, und ist teilwise evakuiert. Die beiden Metallmembranen 6 und 8 haben eine solche Vorspannung, daß die Membrankapsel zu ihrer Stabilisierung keine Stützfeder benötigt, d.h. stabilisiert ist.

An der unteren Metallmembran 8 ist in deren Mitte ein Gewindezapfen 10 (siehe Figur 2) befestigt, der in eine Gewinde-bohrung in der Grundplatte 2 geschraubt ist und an seinem freiin Ende einen Schlitz zum Angriff eines geeigneten Werkzeugs ermöglicht, so daß der Abstand der Membrankapsel 4 von der Grundplatte 2 durch Drehen des Gewindezapfens 10 und somit der Membrankapsel 4 verändert bzw. eingestellt werden kann. In der Mitte der oberen Metallmembran 6 ist eine kreisförmige Auflageplatte 12 (siehe Figur 2) mit glatter Oberfläche befestigt.

Auf einer Seite der Membrankapsel 4, nämlich der Seite der oberen Metallmembran 6, ist das Übertragungswerk des Barometers angeordnet. Das Übertragungswerk umfaßt eine der oberen Metallmembran 6 zugewandte erste Platine 14 sowie eine mit Abstand zur ersten Platine und parallel zur dieser angeordnet zweite Platine 16. Die beiden Platinen sind durch Stehbolzen 18 und 20 fest miteinander verbunde. Die erste Platine 14 ist mittels nicht dargestellter Schrauben an ihren Enden an Ansätzen 22 und 24 der Grundplatte 2 so befestigt, daß die Grundplatte allein mittels dieser Ansätze das gesamte Übertragungswerk neben der Membrankapsel 4 trägt.

In den beiden Platinen 14 und 16 ist drehbar eine Zeigerwelle 26 gelagert, auf der zwischen den beiden Platinen ein Ritzel 28 befestigt ist, das alternativ einstückig mit der Zeigerwelle ausgebildet sein kann. An der Zeigerwelle greift eine Spiralfeder 30 an, die am Stehbolzen 18 festgelegt ist. Mit dem Ritzel 28 kämmt ein Zahnsegment 32, das vorzugsweise eine Inenverzahnung hat und dessen Segmentwelle 34 in den beiden Platinen 14 und 16 drehbar gelagert ist. Die beiden Platinen 14 und 16, die Stehbolzen 18 und 20, die Zeigerwelle 26, das Ritzel 28, die Spiralfeder 30 und das Zahnsegment 32 mit seiner Segmentwelle 34 bilden das Zeigerwerk des dargestellten Übertragungswerkes. Auf die Zeigerwelle 26 kann ein nicht dargestellter Zeiger gesteckt werden.

Die erste Platine 14 weist an einer ihrer Längsseiten zwei Ansätze 36 und 38 in gewissem Abstand voneinander auf. An diesen Ansätzen ist eine Hebelwelle 40 drehbar derart gelagert, daß die Hebelwelle 40 in der Ebene der ersten Platine 14 verläuft, wie aus den Figuren 1 und 2 erkennbar ist. Damit die Hebelwelle 40 möglichst spielfrei gelagert ist, sind ihre beiden Lager als Spitzenlager ausgebildet, wozu in den Ansatz 36 eine an ihrem freien Ende konisch ausgebildete Lagerschraube 42 geschraubt ist, die in eine entsprechende Bohrung an einen Ende der Hebelwelle 40 eingreift. Am anderen Ende der Hebelwelle 40 ist eine konische Spitze ausgebildet, die zusammen mit einer Bohrung im Ansatz 38 das andere Spitzenlager bildet.

Die Hebelwelle 40 trägt an ihrem in Figur 1 rechten Ende einen ersten Hebelarm 44, der durch einen Schlitz 46 im Zahnsegment 32 verläuft, so daß durch Drehen der Hebelwelle 40 das Zahnsegment 32 verschwenkt und damit das Zeigerwerk angetrieben wird. Der Abstand zwischen der Eingriffsstelle zwischen dem ersten Hebelarm 44 und dem Zahnsegment 32 einerseits und der Segmentwelle 34 des Zahnsegments 32 andererseits ist möglichst klein im Verhältnis zum Teilkreisradius des Zahnsegments 32, damit ein großes Übersetzungsverhältnis des Übertragungswerkes erreicht wird. Beim dargestellten Ausführungsbeispiel ist der erste Hebelarm 44 als geradliniger Stift ausgebildet.

Außer dem ersten Hebelarm 44 trägt die Hebelwelle 40 eine zweiten Hebelarm 48, der bei dem in den Figuren 1 und 2 dargestellten Ausführungsbeispiel als Zylinderkopfschraube ausgebildet ist, die in ein entsprechendes Gewindeloch in der Hebelwelle 40 geschraubt ist und an ihrem freien Ende spitz zuläuft. Um ein möglichst kompaktes Barometer zu erreichen, sind beim dargestellten Ausführungsbeispiel die Zeigerwelle 26, die Membrankapsel 4 und die Grundplatte 2 konzentrisch zueinander angeordnet. Der zweite Hebelarm 48 sitzt an der Hebelwelle 40 derart, daß die Achse A des zweiten Hebelarmes 48 mit der Drehachse der Hebelwelle 40 einen rechten Winkel einschließt und schräg nach unten (in Figur 2) zur Mitte der Membrankapsel 4 gerichtet ist. Das freie Ende des Hebelarmes 48 liegt auf der Auflageplatte direkt auf, und die Achse A schließt mit der beim dargestellten Ausführungsbeispiel durch die Fuge zwischen den beiden Metallmembranen 6 und 8 definierten Ebene B einen Auflagewinkel $\alpha$ ein (siehe Figur 2). Zwischen der Achse C des ersten Hebelarmes 44 und der Bewegungsebene des Zahnsegments 32, die mit dem Zahnsegment zusammenfällt, ist ein Winkel $\beta$ eingeschlossen. Es ist aus Figur 2 erkennbar, daß dann, wenn der Auflagewinkel $\alpha$ kleiner wird, auch der Winkel $\beta$ kleiner wird und umgekehrt.

Im Bereich des zweiten Hebelarmes 48 ist an der ersten Platine 14 eine Ausnehmung 50 ausgebildet, in die das freie Ende des zweiten Hebelarmes 48 schwenken kann, damit dieser bei der Montage nicht beschädigt wird.

Bei dem vorstehend beschriebenen Barometer ist das gesamte Übertragungswerk eine kompakte Einheit aus wenigen Elementen, die als Ganzes vorgefertigt und mit der Grundplatte 2 verbunden werden kann und wenig Bauraum beansprucht. Sämtliche Elemente des Übertragungswerkes werden—mit Ausnahme der Platinen 14 und 16 selber—von der beiden Platinen des Zeigerwerkes getragen.

Wenn beispielsweise bei einer Abnahme des Umgebungsdruckes die obere Metallmembran 6 nach oben (in Figur 2) ausgelenkt wird, wird dadurch der zweite Hebelarm 48 im Uhrzeigersinn (in Figur 2) verschwenkt, wodurch die Hebelwelle 40 im Uhrzeigersinn gedreht und dadurch wiederum der erste Hebelarm 44 im Uhrzeigersinn verschwenkt wird. Da der Auflagewinkel $\alpha$ im Bereich von 40° bis 70°, vorzugsweise im Bereich von 45° bis 60° liegt, bewirkt die Auslenkung der oberen Metallmembran 6 einen verhältnismäßig großen Drehwinkel der Hebelwelle 40. Jedenfalls ist dieser Drehwinkel bei gegebener Auslenkung der oberen Metallmembran bzw. der Membrankapsel wesentlich größer, als wenn die Achse A ungefähr parallel zur Ebene B verlaufen würde. Wenn bei niedrigen Luftdrücken der Auflagewinkel $\alpha$ im genannten Bereich verhältnismäßig Klein ist, so daß einer gegebenen Auslenkung ein kleinerer Drehwinkel der Hebelwelle 40 zugeordnet ist, ist auch der Winkel $\beta$ kleiner, so daß wiederum einem gegebenen Drehwinkel der Hebelwelle 40 eine größere Bewegungsstrecke an der Eingriffsstelle zwischen dem ersten Hebelarm 44 und dem Zahnsegment 32 zugeordnet ist, wodruch eine Kompensation der Verringerung des Übersetzungsverhältnisses durch den kleineren Auflagewinkel $\alpha$ erfolgt. Die Schwenkung des ersten Hebelarmes 44 hat wiederum zur Folge, daß das Zahnsegment 32 um seine Segmentwelle 34 gedreht wird, so daß das mit dem Zahnsegment 32 kämmende Ritzel 28 und dadurch wiederum die Zeigerwelle 26 gedreht wird.

In den Figuren 3 bis 5 sind Abwandlungen des vorstehend beschrieben Ausführungsbeispieles dargestellt. Figur 3 zeigt in einer Figur 2 ähnlichen Darstellung lediglich die Hebelwelle 40 und den zwieten Hebelarm 48. Bei dieser Abwandlung ist der zweite Hebelarm 48 nicht als verstellbare Schraube sondern als zylindrischer Stift mit spitzem freien Ende ausgebildet Wesentlich ist auch bei dieser Abwandlung, daß der zweite Hebelarm 48 mit seinem freien Ende direkt auf der Membrankapsel aufliegt und daß die Achse des zweiten Hebelarmes 48 schräg zur Ebene der Membrankapsel verläuft. In Figur 4 ist ausschnittsweise eine Abwandlung des in Figur 1 rechten Endes der Hebelwelle 40 mit dem zugehörigen Lager dargestellt. Dieses Lager ist bei der Abwandlung gemäß Figur 4 nicht als Spitzenlager ausgebildet. Statt dessen ist im Ansatz 38 eine zylindrische Bohrung 52 vorgesehen, in der eine Druckfeder 54 sitzt und in die eine zylindrische Verlängerung 56 der Hebelwelle 40 eingesetzt ist. Die Druckfeder 54 stützt sich an ihrem einen Ende an der Verlängerung 56 ab, so daß auf die Hebelwelle 40 eine (in Figur 4) nach links gerichtete Kraft ausgeübt wird. Somit ist die Hebelwelle 40 in Axialrichtung verstellbar gelagert, da durch Verstellen der Lagerschraube 42 die Verlängerung 56 mehr oder weniger in die Bohrung 52 hineinragt. Diese Verstellung ermöglicht auf einfache Weise eine Änderung des Übersetzungsverhältnisses des Übertragungswerkes, da durch die axiale Verschiebung der Hebelwelle 40 der Abstand zwischen der Eingriffsstelle zwischen dem ersten Hebelarm 44 und dem Zahnsegment 32 einerseits und der Segmentwelle 34 andererseits verändert wird. Schließlich ist in Figur 5 eine abgewandelte erste Platine 14 dargestellt. Diese Abwandlung zeigt, daß die erste Platine 14 nicht einstückig ausgebildet zu sein braucht. Vielmehr kann sie aus mehreren Elementen, beispielsweise Platinenelementen 14a und 14b aufgebaut sein, die erste von den Stehbolzen 18 und 20 fest miteinander verbunden werden. Bei der Abwandlung gemäß Figur 5 hat das Platinenelement 14b die Form der zweiten Platine 16 gemäß Figur 1 und hat das Platinenelement 14a die Form der ersten Platine 14 gemäß Figur 1. Die abgewandelte Ausführungsform der ersten Platine 14 gemäß Figur 5 kann fertigungstechnische Vorteile haben, z.B. hinsichtlich der Ausbildung der Zapfenlager für die Zeigerwelle 26 und die Segmentwelle 34.

**Patentansprüche**

1. Barometer mit einer stabilisierten Membrankapsel (4), einer die Membrankapsel tragenden Grundplatte (2), einem auf einer Seite der Membrankapsel angeordneten Zeigerwerk, das zwei im wesentlichen parallele Platinen (14, 16), zwischen denen eine Zeigerwelle (26) drehbar gelagert ist, und eine Antriebselement umfaßt, und einer drehbar gelagerten Hebelwelle (40) mit zwei Hebelarmen (44, 48), wobei der erste Hebelarm (44) zum Antrieb des Zeigerwerkes mit dessen Antriebselement gekoppelt ist und wobei der zweite Hebelarm (48) mit seinem zur Mitte der Membrankapsel gerichteten freien Ende direkt auf der Membrankapsel (4) aufliegt, dadurch gekennzeichnet, daß die Hebelwelle (40) in der Ebene der der Membrankapsel (4) zugewandten ersten Platine (14) des Zeigerwerkes verlaufend an dieser Platine (14) gelagert ist und daß die Achse (A) des zweiten Hebelarmes (48) schräg zur Ebene (B) der Membrankapsel (4) verläuft.

2. Barometer nach Anspruch 1, dadurch gekennzeichnet, daß die Achse (A) des zweiten Hebelarmes (48) mit der Ebene (B) der Membrankapsel (4) einen Winkel ($\alpha$) im Bereich von 40° bis 70° einschließt.

3. Barometer nach Anspruch 2, dadurch gekennzeichnet, daß die Achse (A) des zweiten Hebelarmes (48) mit der Ebene (B) der Membrankapsel (4) einen Winkel ($\alpha$) im Bereich von 45° bis 60° einschließt.

4. Barometer nach einem der Ansprüche 1 bis 3, dadurch gekennzeichnet, daß der zweite Hebelarm (48) mit einem Außengewinde versehen und verstellbar in die Hebelwelle (40) geschraubt ist.

5. Barometer nach einem der Ansprüche 1 bis 4, dadurch gekennzeichnet, daß die Achse des ersten Hebelarmes (44) mit der Bewegungsebene des Antriebselementes (32) einen Winkel ($\beta$) einschließt, der kleiner wird, wenn der Winkel ($\alpha$) zwischen der Achse (A) des zweiten Hebelarmes (48) und der Ebene (B) der Membrankapsel (4) abnimmt.

6. Barometer nach einem der Ansprüche 1 bis 5, gekennzeichnet durch eine Ausnehmung (50) in der die Hebelwelle (40) tragenden ersten Platine (14) im Bereich des zweiten Hebelarmes (48).

7. Barometer nach einem der Ansprüche 1 bis 6, wobei das Antriebselement des Zeigerwerkes ein schwenkbares Zahnsegment ist, das mit einem Ritzel auf der Zeigerwelle kämmt und über einen Schlitz in Eingriff mit dem ersten Hebelarm steht, dadurch gekennzeichnet, daß das Zahnsegment (32) in den beiden Platinen (14, 16) des Zeigerwerks gelagert ist.

8. Barometer nach Anspruch 7, dadurch gekennzeichnet, daß die Hebelwelle (40) axial einstellbar gelagert ist.

## Revendications

1. Baromètre comprenant une capsule à membranes stabilisée (4), une plaque-support (2) portant la capsule, un mécanisme indicateur, disposé sur l'une des faces de la capsule, qui comporte deux platines (14, 16) sensiblement parallèles, entre lesquelles un arbre porte-aiguille (26) est monté de manière à pouvoir pivoter, et un élément d'entraînement, ainsi qu'un arbre de levier (40) monté de manière à pouvoir pivoter et muni de deux bras de levier (44, 48), le premier bras de levier étant couplé avec l'élément d'entraînement du mécanisme indicateur, pour entraîner ce mécanisme, tandis que le second bras de levier (48) est directement en app i sur la capsule à membranes (4) par son extrémité libre, dirigée vers le centre de la capsule, caractérisé en ce que l'arbre de levier (40) est monté sur la première platine (14), adjacente à la capsule à membranes (4), due mécanisme indicateur, en s'étendant dans le plan de cette platine (14), et en ce que l'axe (A) du second bras de levier (48) est orienté obliquement par rapport au plan (B) de la capsule à membranes (4).

2. Baromètre suivant la revendication 1, caractérisé en ce que l'axe (A) du second bras de levier (48) fait avec le plan (B) de la capsule à membranes (4) un angle ($\alpha$) compris entre 40° et 70°.

3. Baromètre suivant la revendication 2, caractérisé en ce que l'axe (A) du second bras de levier (48) fait avec le plan (B) de la capsule à membranes (4) un angle ($\alpha$) compris entre 45° et 60°.

4. Baromètre suivant l'une des revendications 1 à 3, caractérisé en ce que le second bras de levier (48) est muni d'un filetage externe et est vissé en position réglable dans l'arbre de levier (40).

5. Baromètre suivant l'une des revendications 1 à 4, caractérisé en ce que l'axe du premier bras de levier (44) fait avec le plan dans lequel se déplace l'élément d'entraînement (32) un angle ($\beta$) qui décroît lorsque l'angle ($\alpha$) entre l'axe (A) du second bras de levier (48) et le plan (B) de la capsule à membranes (4) décroît.

6. Baromètre suivant l'une des revendications 1 à 5, caractérisé par un évidement (50) dans la première platine (14), qui porte l'arbre de levier (40), dans la région du second bras de levier (48).

7. Baromètre suivant l'une des revendications 1 à 6, dans lequel l'élément d'entraînement du mécanisme indicateur est un segment denté pivotant qui engrène avec un pignon de l'arbre porte-aiguille et est en prise avec le premier bras de levier par l'intermédiare d'une fente, caractérisé en ce que le segment denté (32) est monté dans les deux platines (14, 16) du mécanisme indicateur.

8. Baromètre suivant la revendication 7, caractérisé en ce que l'arbre de levier (40) est monté de manière à pouvoir être réglé axialement.

## Claims

1. Barometer comprising a stabilized membrane capsule (4), a base plate (2) supporting said membrane capsule, a pointer mechanism disposed at one side of said membrane capsule, said pointer mechanism having two plate-bars (14, 16) substantially in parallel with each other, a pointer shaft (26) being rotatably supported between said two plate-bars, and a driving element, furthermore comprising a rotatably supported lever-shaft (40) having two lever arms (44, 48), said first lever arm (44) for driving said pionter mechanism being coupled with said driving element thereof and the free end of said second lever arm (48) directed to the centre of said membrane capsule directly abutting on said membrane capsule (4), characterized in that said lever shaft (40) running in the plane of said first plate-bar (14) of said pointer mechanism facing said membrane capsule (4) is mounted on said plate-bar (14) and in that the axis (A) of said second lever arm (48) is arrnaged in oblique manner as to the plane (B) of said membrane capsule (4).

2. Barometer as per Claim 1, characterized in that with the plane (B) of said membrane capsule (4) the axis (A) of said second lever arm (48) includes an angle ($\alpha$) in the range of from 40° to 70°.

3. Barometer as per Claim 2, characterized in that with the plane (B) of said membrane capsule (4) the axis (A) of said second lever arm (48) includes an angle ($\alpha$) in the range of from 45° to 60°.

4. Barometer as per anyone of Claims 1 to 3, characterized in that said second lever arm (48) is provided with a male thread and is screwed adjustably in said lever shaft (40).

5. Barometer as per anyone of Claims 1 to 4, characterized in that with the plane of movement of said driving element (32) the axis of said first lever arm (44) includes an angle ($\beta$) getting smaller if the angle ($\alpha$) between the axis (A) of said second lever arm (48) and the plane (B) of said membrane capsule (4) decreases.

6. Barometer as per anyone of Claims 1 to 5, characterized by a recess (50) in said first plate-bar (14) supporting said lever shaft (40) in the region of said second lever arm (48).

7. Barometer as per anyone of Claims 1 to 6, said driving element of said pointer mechanism being a pivotable tooth segment meshing with a pinion of said pointer shaft and being engaged with said first lever arm via a slot, characterized in that said tooth segment (32) is placed in said two plate-bars (14, 16) of said pointer mechanism.

8. Barometer as per Claim 7, characterized in that said lever shaft (40) is disposed in axially adjustable manner.

0011681

Fig.1

Fig.2

Fig.3

Fig.4

Fig.5